# EUROPEAN PATENT APPLICATION

(11) **EP 3 745 220 A2**
(43) Date of publication of application: **02.12.2020**
(21) Application number: 20177244.9
(22) Date of filing: 28.05.2020
(51) Int. Cl.: G05B 19/048, H04L 12/28

(54) **INSTALLATION VERIFICATION**

(30) Priority: 29.05.2019 GB 201907597
(71) Applicant: DELMATIC LIMITED, London W4 5PY (GB)
(72) Inventor: WOODNUTT, Stephen, Greater London W4 5PY (GB); MULLER, David, Greater London W4 5PY (GB)
(74) Representative: Robson, Aidan John

(57) **Abstract**

The invention provides a method of installation verification for electrical and electronic devices in a building, including the steps of: connecting a remote commissioning module into a network, which is configured to have at least one device installed, repeatedly polling, by the remote commissioning module, the network to determine whether any devices are installed on the network, comparing, at the remote commissioning module, the identity of any devices installed on the network with a database of devices scheduled to be installed, determining, by the remote commissioning module, the status of any devices currently installed on the network which are also included in the database of devices scheduled to be installed and providing to a client portal, from the remote commissioning module, information based on the comparison and determined status.

## Description

### BACKGROUND OF THE INVENTION

The invention relates to the field of electrical installations, and in particular the commissioning, verification and testing of installations in buildings, typically buildings under construction or refurbishment.

Conventionally, the installation, commissioning, verification and testing of electrical systems follows a process which involves many repetitions of the same few steps before the system can be handed over to a client.

Initially, a schedule of devices to be installed will be provided to a contractor. This includes instructions about what devices (lights, actuators, control modules, fire systems etc.) to install and where to install them.

When this is complete a commissioning engineer will visit the location of the installation to begin the commissioning of the installation. Ideally, at this point, the engineer will be able to commission every device included on the schedule. Firstly the engineer needs to test whether all devices have been correctly installed and are fault free. However, the commissioning engineer is likely to initially find devices have not been installed correctly, have been omitted or are faulty, and will compile a new set of instructions for the contractor to complete before the engineer can begin commissioning. This is called snagging.

Commissioning entails setting up any devices installed in the system. For instance, a lighting controller may need to have any connected lamps identified to the controller, and then a program installed to allow automatic or manual control of the lights. A heating controller may need to identify sensors and HVAC units, and may also require software to be loaded.

If any of the devices or controllers are not installed, or not properly installed and functioning, it may not be possible for the commissioning engineer to commission the installation. Therefore an initial snagging list of defects must be completed before commissioning can begin.

Once the first round of snagging has been completed, i.e. the defect issues have been brought to the contractors attention and then rectified, the commissioning engineer can begin the commissioning process.

Once the commissioning is almost complete, another snagging list is made, which will often include other items which must be rectified before commissioning can be completed. This is an iterative process, in which several rounds of final snagging, rectifying and commissioning are performed.

The process of installation and commissioning is therefore time consuming. Time and money are wasted between separate installation phases and separate commissioning phases.

Embodiments of the present invention seek to overcome these problems by providing a system and method for remote testing and commissioning of an installation, wherein the installation may be repeatedly tested during an installation process to determine any installation faults and any faulty devices in the installation, as well as units which are correctly installed to be commissioned and their operation tested.

### SUMMARY OF THE INVENTION

The invention is defined in the independent claims to which reference should now be made. Advantageous features are set forth in the dependent claims.

### BRIEF DESCRIPTION OF THE FIGURES

Embodiments of the invention will now be described, by way of illustration only, and with reference to the drawings, in which:
Figure 1 shows an exemplary diagram of a system comprising a remote commissioning module for carrying out the invention.
Figure 2 shows a flow diagram describing the method according to the invention.
Figure 3 shows an access hierarchy diagram for a remote commissioning module.

### DETAILED DESCRIPTION OF THE PREFERRED EMBODIMENTS

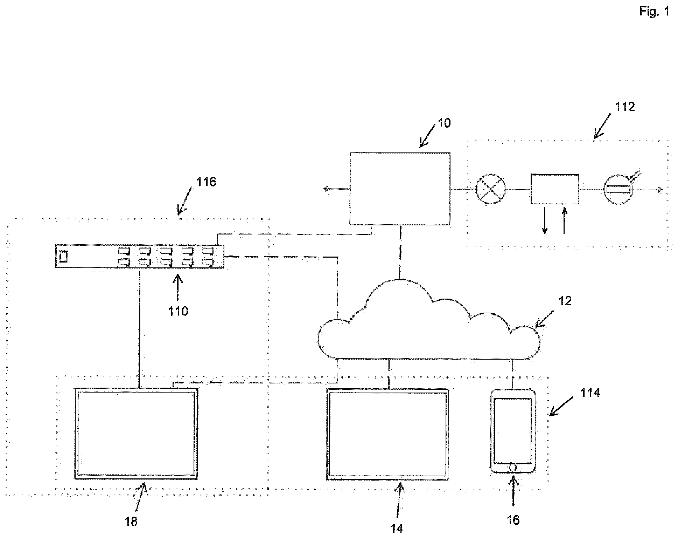

Figure 1 shows an exemplary system according to embodiments of the present invention.

A remote commissioning module 10 is illustrated as installed in a network 112. The network 112 in this example has a lamp, I/O module and sensor also installed on it. The remote commissioning module 10 can be installed somewhere in the centre of the network 112, as shown by the arrows extending from either side, or may be used as a terminator for the network 112. The remote commissioning module can retrieve data from the network 112 by repeatedly polling the network. The module can then arrange how this information is used to extrapolate information about the network 112

The remote commissioning module 10 is connected wirelessly to a cloud based client portal 12. In the alternative to the above scenario, the client portal 12 may hold all of the information from the remote commissioning module 10 and arrange how this information is used to extrapolate information about the network 112.

The cloud client portal 12 can be accessed over a network link, typically wireless, by client devices, such as PC 14 and tablet/smartphone 16, in the client side 114. The devices can access the client portal 12 by a web application, for example, or via a smartphone or tablet app.

The client side also includes PC 18 connected to optional server 110, arranged on an installation administrator side 116 of the system. PC 18 could alternatively be a network (not shown) of PCs, tablets, smartphones etc. The administrator PC 18 or network (not shown) can be used to design and manage the installation by a design engineer or project manager or the like.

The administrator PC 18 is connected to the cloud client portal 12 via optional server 110 or by a wireless link, or both. The administrator PC 18 is known as a head-end computer, and may be a desktop PC or more likely a laptop carried by an engineer moving from site to site.

Importantly, administrator PC 18 can be used to prepare a database of all devices which are scheduled to be installed on the network 112. This can be automatically generated when designing the installation, or can be deliberately created as part of the remote commissioning process. The database is preferably stored at the remote commissioning module 10, but can also be stored on the server 110, in the cloud client portal 12, or any combination of these.

Control of the database can be assumed by the administrator PC or head-end laptop the like when an engineer is actively working on site.

The remote commissioning module 10 is connected to the server 110 via the cloud client portal 12, and may also have a direct wireless link to the server 110.

The database may remain stored at the remote commissioning module 10, or at the server 110, administrator PC/ 18, or the cloud client portal 12, and may be periodically updated. The remote commissioning module 10 may pass and receive information to and from the cloud client portal 12 regarding the information on the database. Storing the database at the server 110 has an advantage in that it can be accessed without interfering with the operation of the remote commissioning module 10, whilst storing the database at the remote commissioning module 10 has an advantage in that a separate server is not necessarily required.

In this way, any processing of data taken by polling the network 112 and determining the status of any devices installed can be done at the remote commissioning module 10 or in the cloud client portal 12.

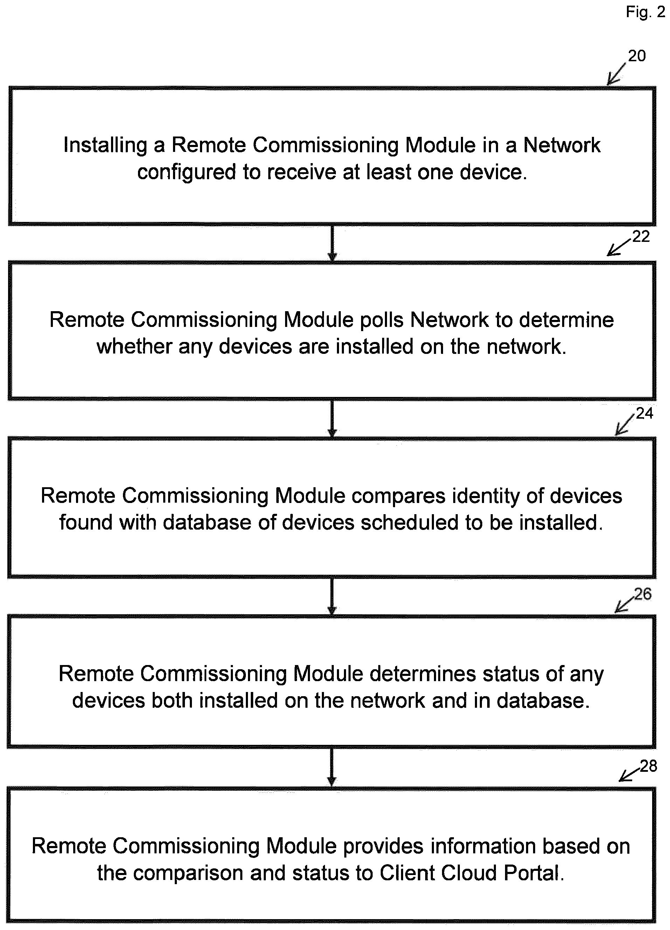

Figure 2 shows a flow diagram illustrating the commissioning method according to an embodiment of the invention.

Step 20 of the method comprises installing a remote commissioning module 10 in a network 112 which is configured to receive at least one device. The network 112 may be part of an installation such as an electrical installation in a new building or may be a retrofitted installation in an existing building. Each device may be a driver, a bus-wire such as an industrial networking bus, a PIR (passive infrared device), an emergency lamp or a monitoring device.

Installation of the remote commissioning module 10 can be carried out at any point in the installation process, but should be done in advance of the point where commissioning is expected to be started.

The remote commissioning module 10 can connect into the network via a number of methods. For instance, the remote commissioning module can use one of a number of proprietary communications interfaces, such as Profibus, Profinet, Interbus, AS-I, DALI, Wi-Fi, IR, Bluetooth etc. The module may be physically connected into the network using standard I/O connections, such as copper wire, or via flat-cable type installation systems, Ethernet, or the module may not be physically connected at all.

The module 10 can essentially perform major initial snagging and remove the need for a commissioning engineer to visit site to initially check the installation..

At step 22 of the method, the remote commissioning module 10 polls the network 112 to determine whether any devices are installed on the network 112. When the commissioning module is installed, it may be that no other devices are currently installed on the network 112. Alternatively, most of the devices may have already been installed on the network 112.

The commissioning module can repeatedly monitor the devices currently installed on the network 112 for faults in the devices or their installation.

At step 24 of the method, the remote commissioning module 10 compares the identity of any devices which responded to the polling with a database of devices which should be installed on the network 112. The database can be prepared when the installation is designed and uploaded to the remote commissioning module 10. Alternatively, the remote commissioning module 10 can connect to a server containing the database to compare with the database.

The database can contain a list of all devices scheduled to be installed in the installation. The database can be compiled from a process and instrumentation drawing, an I/O list, a parts order or other information. This can be done automatically or manually. By creating the database in this manner, real time information about devices scheduled to be installed can be kept. For instance, if a device is removed from the installation design, the database can be updated to remove the device.

The database can contain other information related to the devices scheduled to be installed.

At step 26 of the method, the remote commissioning module 10 determines the status of any devices currently installed on the network 112 which are also present in the database. The module can then update the database with the status. Alternatively the module can create a local database and populate it with information from the database and the determined status.

The status of devices installed on the network 112 may be that they are installed correctly. The remote commissioning module 10 may also be able to determine whether the devices are connected to any inputs or outputs to which they are intended to be connected. The module may also be able to determine whether the I/O is operating as expected. Furthermore, other status information may be determined.

In some instances, the remote commissioning module 10 may determine, during comparison of the identity of installed devices with the database, that one or more devices scheduled to be installed have not yet been installed on the network 112. In another or the same instance, the remote commissioning module 10 may determine that one or more devices installed on the network 112 are not yet scheduled to be installed.

Additionally, the remote commissioning module 10 may attempt to ascertain the status of any devices installed on the network 112 which do not feature in the database.

The status of devices installed on the network 112 may be confirmation that they are installed. The remote commissioning module 10 may also be able to determine whether the devices are installed correctly, such as whether they are connected to any inputs or outputs that they should be. The module may also be able to determine whether the I/O is operating as expected. Furthermore, other status information may be determined.

At step 28 of the method the remote commissioning module 10 provides information based on the comparison and the determined status to a client portal 12. The client portal 12 can be a web-application connected to the remote commissioning module 10. The module can use the database to populate the client portal 12 with information, and can use details of the comparison to provide more information.

Information provided to the client portal 12 can be the status information determined by the remote commissioning module 10 from the determination step 26. Additionally, the information can be information extrapolated from the determined statuses, such as whether the installation is going to schedule. Other information may be that a set of devices have been delayed in installation, and prompts to organise the installation of the set of devices. Further information could be that a particular device or set of devices are malfunctioning. The portal may also be able to provide information about devices which are not part of the schedule but have been installed.

The portal can be accessed by contractors and also by a commissioning engineer. The different engineers may have different access levels to allow them to access different sets of information.

A benefit of the invention is realised by the steps of comparing the identities of devices installed on the network 112 with a database, determining the status of the installed devices and providing information based on this to a client portal 12. In particular, by acquiring the identities of devices which are currently installed on the network 112 the planning of commissioning time can be optimised. If enough devices are installed to begin commissioning then a commissioning engineer can attend site. This prevents the commissioning engineer from arriving on site before the installation is ready to be commissioned.

Furthermore, the remote commissioning module 10 can be polled repeatedly, allowing it to constantly update the information relayed to the client portal 12. The commissioning engineer can then determine whether the installation is progressing to schedule. This allows advance planning as to when the commissioning engineer should arrive on site.

In one instance, it may be that commissioning can begin once a certain set of devices are installed. A benefit of the invention is therefore that the portal can provide information about exactly which devices have been installed. The client portal 12 can also be updated to provide instructions to a contractor about which devices are the most critical devices to be installed, thereby reducing the time between the beginning of installation and the beginning of commissioning, and thus increasing the overlap between the two.

Further benefits are found in the method of the invention in the provision of information to the client portal 12.

Information sent by the remote commissioning module 10 may be as simple as whether a device which is scheduled to be installed has been installed. This can provide benefits as described above. However, the remote commissioning module 10 may be able to extrapolate further information from the status determining step of the invention. The module may be able to use information to provide a real time installation schedule to the client portal 12, by monitoring the progress of the installation.

The module may be able to use information about which devices are installed to determine, for example, that a set of devices from a particular supplier have not been installed. This may then cause the client portal 12 to prompt a contractor or project manager to check whether a delivery has arrived from the particular supplier.

The module may be able to use information about which devices are installed and functioning correctly to determine, for example, that a set of devices from a particular supplier are not operating correctly. This may then cause the client portal 12 to prompt a contractor or project manager to examine the problem. The module may also determine that a set of devices on a particular branch or portion of the network 112 are not functioning correctly, and prompt the contractor to examine whether the branch has been installed correctly.

The determination step of the invention may also extend to determining the status of any devices currently installed on the network 112 which are not included in the database. This can then be used to inform the client portal 12 that devices outside of the schedule have been installed on the network 112.

Devices not scheduled to be installed may be placed on the network 112 by third party installers, for example, by mistake, or because the network 112 is a shared network 112. Providing information based on the determined status of devices not scheduled to be installed allows the commissioning engineer to acquire information on the devices. From this information, the engineer may be able to see, from the client portal 12, whether the device is operating correctly, if for example it has been installed to complete a temporary task. The engineer may also be able to use the client portal 12 to see the type of device installed, to see if it matches with a device type to be installed by a separate contractor. The engineer may also be able to use the client portal 12 to see if the device is a malicious device.

The client portal 12 itself may be a web application, accessible from a PC, tablet, mobile phone, or the remote commissioning module 10 itself. The portal may be stored on a cloud server or may be stored on the remote commissioning module 10 and be accessible via the cloud 12.

The client portal 12 may also compile the extrapolated data, such as the real time schedule, poorly connected branches etc instead of this data being compiled at the remote commissioning module 10.

The client portal 12 can be accessed by a commissioning engineer, to realise the benefits described above. If a project manager separate to the commissioning engineer is engaged with the project, they may need to access the portal. Furthermore, the contractor may also need to access the portal , so that the contractor can keep up to date with a current snagging list. The portal may also be accessed by the client of the installation to monitor the progress of the installation.

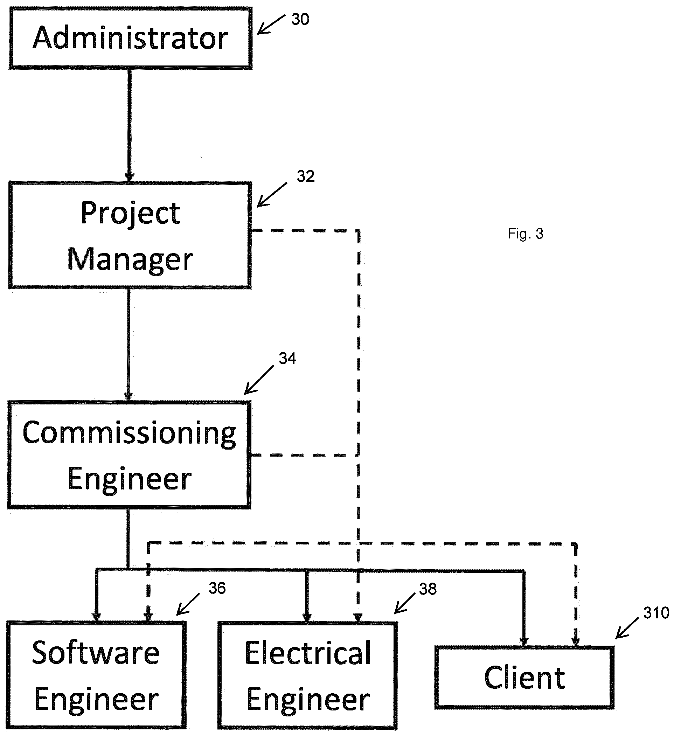

To realise this, the client portal 12 may have different access levels for different users, as shown in figure 3. An administrator 30 may have top-level access to all information available at the client portal. A project manager 32 may have access to the next level of information, and a commissioning engineer 34 may have access to the level of information below the project manager 32. A software engineer 36 and an electrical engineer 38, as contractors, may have the same access level, but have access to different information within that access level. Similarly, the end client 310 of the installation may have access to the same level as the contractors, but have access to different information.

A project manager 32 may have full access to the client portal 12 for the particular installation. A commissioning engineer may have slightly reduced access, or may alternatively have the same level of access. The information which the commissioning engineer is able to see may be information such as device statuses, and/or testing parameters for devices.. A contractor 36, 38 may only have access to information such as which devices are scheduled to be installed, and whether or not they are installed. A client may have very limited access, to allow them to see the progress of the installation. The project manager and commissioning engineer may also have access to other projects/installations via the portal.

The access levels can be protected by passwords. The access levels may be tiered so that access to a top level allows access to all levels, and access levels are cascaded down from there. As noted above, some access levels may be of an equivalent level but may contain information separated between relevant users. For instance, a software engineer 36 may be given an access level at the same level as an electrical engineer 38 , but the software engineer may be only be able to see information relating to I/O modules, and the electrical engineer may only be able to see information relating to network devices.

The project manager 32 or commissioning engineer 34 may also control what the contractors and client 310 are able to see. This is shown in figure 3 by dotted lines. For the contractor, the commissioning engineer or project manager 32 may be able to restrict access to certain unnecessary information the client portal 12 is able to display, such as certain areas of the installation which are not ready to be installed yet. Also, the commissioning engineer 34 may be able to provide instructions to the contractors 36, 38 via the client portal 12, and allow them to see prompts from the client portal 12.

For the client, the engineer/manager 34/32 may be able to restrict access to information they do not want the client 310 to see. This may be information such as informal snagging, instructions to the contractor 36, 38 or delays to the schedule.

The client portal 12 provides the contractor 36, 38 and commissioning engineer 34 with tools to help visualise the installation. The tools may be snagging schedules, bullseye maps identifying snag location, heat-maps indicating snag severity, and snagging status data.

The client portal 12 may also provide real-time schedules showing the installation process and real time snags. The snags can be filtered by area, type or device and assigned to particular teams for rectification. Each team may therefore have an access level for the client portal 12 so that only they can see the snags which they must rectify.

Described above are a number of embodiments with various optional features. It should be appreciated that, with the exception of any mutually exclusive features, any combination of one or more of the optional features are possible.

Various modifications to the embodiments described above are also possible and will occur to those skilled in the art without departing from the scope of the invention which is defined by the following claims.

## Claims

1. A method of installation verification for electrical and electronic devices in a building, the method comprising the steps of:
connecting a remote commissioning module (10) in a network (112), the network (112) configured to have at least one device installed;
repeatedly polling, by the remote commissioning module, the network (112) to determine whether any devices are installed on the network (112);
comparing, at the remote commissioning module (10), the identity of any devices installed on the network (112) with a database of devices scheduled to be installed;
determining, by the remote commissioning module (10), the status of any devices installed on the network (112) which are also included in the database of devices scheduled to be installed;
providing to a client portal (12), from the remote commissioning module (10), information based on the comparison and determined status.

2. The method of installation verification of claim 1, further comprising:
determining, by the remote commissioning module, the status of any devices currently installed on the network which are not included in the database of devices scheduled to be installed.

3. The method of installation verification of claims 1 or 2, wherein:
the status of a device comprises whether the device has been installed on the network.

4. The method of installation verification of claims 1 2, or 3, wherein:
the status of a device comprises whether the device is operating correctly.

5. The method of installation verification of any preceding claim, wherein:
the information provided to the client portal comprises device installation instructions for an installation engineer.

6. The method of installation verification of any preceding claim, wherein:
the information provided to the client portal comprises snagging information.

7. The method of installation verification of any preceding claim, wherein:
the client portal is password protected

8. The method of installation verification of claim 7, wherein :
the client portal has a plurality of access levels, wherein each access level is password protected by a different password.

9. A system for installation verification for electrical and electronic devices in a building, the system comprising;
a database containing the identity of any devices scheduled to be installed on a network (112);
a device (10) configured to:
connect into the network (112);
repeatedly poll the network to determine whether any devices are installed on the network (112);
compare the identity of any devices installed on the network (112) with the database;
determine the status of any devices installed on the network (112) which are also included in the database;
provide information based on the comparison and determined status;
a client portal (12) configured to receive the information from the device (10).

10. The system of claim 9, wherein the device is further configured to:
determine the status of any devices currently installed on the network which are not included in the database.

11. The system of claim 9 or 10, wherein:
the status of a device comprises whether the device has been installed on the network.

12. The system device of claim 9, 10 or 11, wherein:
the status of a device comprises whether the device is operating correctly.

13. The system of any of claims 9 to 12, wherein:
the information comprises device installation instructions for an installation engineer.

14. The system of any of claims 9 to 13, wherein:
the information provided comprises snagging information.
